# DEMANDE DE BREVET EUROPEEN

(11) **EP 4 256 915 A1**
(43) Date de publication de la demande: **11.10.2023**
(21) Numéro de dépôt: 23166860.9
(22) Date de dépôt: 05.04.2023
(51) Int. Cl.: A01B 49/06, A01C 7/06, A01C 7/20, A01C 5/06, A01C 7/00

(54) **MACHINE AGRICOLE À AU MOINS DEUX AXES INDÉPENDANTS**

(30) Priorité: 07.04.2022 FR 2203216
(71) Demandeur: Carbure Technologies SAS, 49490 Noyant-Villages (FR)
(72) Inventeur: DUMOULIN, Tom, 49400 SAUMUR (FR)
(74) Mandataire: Cabinet Nony

(57) **Abrégé**

L'invention concerne une machine agricole (10) comportant un support (12) destiné à être tracté par un engin agricole selon une direction d'avancement (F), la machine agricole comportant :
- un premier outil (14) ;
- une roue principale (24) ;
le premier outil et la roue principale étant chacun montés sur le support de manière mobile au moins dans une direction verticale, indépendamment l'un de l'autre.

## Description

### Domaine technique

La présente invention concerne une machine agricole destinée à être tractée par un engin agricole, et en particulier un semoir. Un tel semoir est destiné à ouvrir la terre de manière à créer une fente, puis à disposer un composé, et en particulier une graine dans ladite fente. L'invention concerne également une roue de fermeture notamment pour un tel semoir ainsi qu'un procédé de semage mettant en oeuvre un tel semoir.

### Technique antérieure

Les semoirs à soc bouleversent la terre et bourrent lorsqu'il y a trop de débris végétaux. Alternativement, on connaît un semoir à disque ouvreur. Un tel semoir comporte un disque ouvreur, ou disque d'ouverture, qui vient découper la terre et ainsi créer une fente, une descente de semoir disposée au-dessus ou à l'arrière du disque ouvreur et au moyen de laquelle une graine est déposée dans la fente, ainsi qu'une roue de fermeture permettant de fermer la fente. Cependant, ce semoir ne permet pas d'autres application que le semage.

La plupart des semoirs actuels nécessitent également un travail de la terre conséquent avant l'utilisation du semoir, et en particulier un décompactage, un déchaumage, et un labour. Ce travail de préparation a un coût élevé et un impact négatif sur l'environnement.

Les semoirs actuels ne permettent pas non plus de limiter le foisonnement du sol lorsque le sol est ouvert par un disque d'ouverture ou par un soc.

Il existe un besoin pour une machine agricole permettant de résoudre, au moins partiellement, les problèmes susmentionnés.

### Exposé de l'invention

Pour ce faire, l'invention propose une machine agricole, et en particulier un semoir, comportant un support destiné, dans une position de service, à être tracté par un engin agricole selon une direction d'avancement, le semoir comportant :
- un premier outil monté sur le support ;
- une roue principale montée sur le support.

**Suivant un premier mode de réalisation principal,** le premier outil et la roue principale sont chacun montés sur le support de manière mobile au moins dans une direction verticale, indépendamment l'un de l'autre.

De préférence, le premier outil et la roue principale sont chacun montés à rotation sur le support, autour d'axes horizontaux respectifs, indépendamment les uns des autres.

De préférence encore, le support est monobloc, c'est-à-dire rigide. Il peut comprendre une seule pièce rigide ou plusieurs pièces rigidement liées entre elles.

Comme on le verra plus en détail dans la suite de la description, les outils, c'est-à-dire le premier outil et la roue principale et d'éventuels autres outils, peuvent être ainsi mis en position de service ou hors position de service indépendamment les uns des autres. Cela permet avantageusement de modifier la configuration de la machine agricole sans qu'il ne soit nécessaire de monter ou démonter des outils sur le support.

En outre, chaque outil peut pivoter et se déplacer verticalement sous l'effet d'un obstacle, par exemple d'une pierre, sans que ce pivotement entrave l'efficacité des autres outils. En particulier, si l'un des outils ménageant une fente dans le sol rencontre un obstacle solide tel qu'une pierre, cet outil est susceptible d'être dévié verticalement. Les outils étant indépendants les uns des autres, cette déviation n'aura toutefois pas d'impact sur les fonctions des autres outils, sur lesquels on applique de préférence une pression par exemple hydraulique indépendante et de valeur adaptée à chaque outil. Autrement dit, un soulèvement du premier outil ou de la roue principale sous l'effet d'un passage sur un obstacle n'affecte pas la position verticale de la roue principale ou du premier outil, respectivement. De préférence, un soulèvement d'un outil quelconque sous l'effet d'un passage sur un obstacle n'affecte pas la position verticale des autres outils.

Par exemple, US 10806068 décrit une machine agricole comportant des outils montés à rotation sur un support. Un pivotement d'un outil, par exemple sous l'effet d'un passage sur une pierre, pousse le support vers le haut. Le support étant lui-même monté à rotation sur la poutre transversale, il se soulève, entrainant avec lui les autres outils qu'il supporte. Les outils ne sont donc pas mobiles verticalement indépendamment les uns des autres.

Pour obtenir une telle indépendance, la machine agricole comporte de préférence au moins une poutre transversale à laquelle le support est rigidement fixé.

Classiquement, la poutre transversale est massive, pesant typiquement plus de 100 kg. Elle porte un ou plusieurs modules identiques, de préférence plus de 3, plus de 5, plus de 10, plus de 20 et/ou moins de 50 modules. Chaque module comporte un support, au moins un premier outil monté sur le support et une roue principale montée sur le support, voire d'autres outils comme ceux décrits ci-après. Chaque module, fixé rigidement sur la poutre, pèse ainsi typiquement plus de 50 kg, plus de 100 kg et/ou moins de 500 kg. Enfin, la poutre transversale est classiquement rigidement fixée sur un engin agricole tel qu'un tracteur, qui lui-même pèse généralement plusieurs tonnes, généralement entre 4 et 15 tonnes.

L'engin agricole, la poutre transversale et les modules qu'elle porte constituent une masse élevée, sensiblement immobile verticalement et très stable, qui absorbe ainsi la poussée verticale exercée sur le support lors du passage d'un outil sur un obstacle comme une pierre. Aucun mouvement vertical n'est donc transmis aux autres outils (non soulevés par la pierre), notamment à la roue principale. En outre, la poussée que ces autres outils exercent sur le sol, éventuellement ajustée par un organe élastique en appui sur le support, ne sera pas impactée.

Les outils, et en particulier le premier outil et la roue principale, se déplacent verticalement et fonctionnent ainsi indépendamment les uns des autres.

Pour obtenir une telle indépendance, en complément ou alternativement à la fixation rigide du support sur la poutre transversale, la machine agricole peut comporter, pour la roue principale et pour le premier outil, de préférence pour chaque outil, d'un dit module, un organe élastique respectif exerçant une pression constante sur ledit outil de manière que ledit outil exerce en service une poussée constante sur le sol.

De préférence, l'organe élastique associé à un outil est interposé entre le support et l'outil, et agit en compression. De préférence, l'organe élastique est un vérin hydraulique ou pneumatique.

De préférence, la machine agricole comporte au moins un régulateur de pression configuré pour maintenir constante la pression exercée par chaque vérin, ladite pression, ou « pression de consigne », étant prédéterminée en fonction de l'outil associé au vérin.

Par « maintenir une pression constante », on entend que la pression exercée par le vérin est maintenue dans un intervalle de 10%, de préférence de 5%, de préférence 3% autour de la pression de consigne.

Dans un mode de réalisation, la machine agricole comporte, pour chaque vérin ou pour plusieurs vérins à maintenir à la même pression de consigne, un accumulateur hydropneumatique, également connu sous le nom de « boule d'azote », configuré pour amortir les variations de la pression exercée par le ou les vérins. De préférence, plusieurs vérins, de préférence tous les vérins ayant la même pression de consigne sont connectés à un accumulateur hydropneumatique commun. Par « accumulateur hydropneumatique », on entend tout réservoir hydraulique ou pneumatique.

Ainsi, la machine agricole selon l'invention garantit l'indépendance des outils, et en particulier du premier outil et de la roue principale. Grâce à l'invention, le déplacement vertical de l'un d'entre eux, notamment en cas de collision avec un obstacle, n'a pas d'impact sur la position des autres outils et sur la pression exercée sur ces autres outils à partir du support.

En outre, l'utilisation sélective d'un ou plusieurs outils installés sur la machine agricole permet de remplacer plusieurs machines différentes par une unique machine agricole. De manière particulièrement avantageuse, la machine agricole selon l'invention a toujours le même poids quelle que soit la configuration choisie d'outils en position de service, puisque les outils sont fixés à la machine agricole. Cela permet de minimiser des problèmes de dévers lors du passage successif de plusieurs machines agricoles de poids différents. En effet, en cas de passage d'un tracteur sur un terrain en pente, le trajet du tracteur peut être influencé par le poids de la machine agricole tractée. Les solutions existantes de correction de dévers ne sont pas toujours satisfaisantes. L'utilisation d'une unique machine agricole, ayant un poids constant, permet de résoudre ce problème de dévers.

Une machine agricole selon le premier mode de réalisation principal de l'invention peut également comporter une ou plusieurs des caractéristiques optionnelles suivantes :
- le premier outil est un disque d'ouverture monté à rotation sur le support de manière à ménager une fente dans le sol et/ou à couper des végétaux ;
- la machine agricole comporte au moins un deuxième outil monté sur le support de manière mobile au moins dans une direction verticale, indépendamment du premier outil et de la roue principale ;
- le premier outil, la roue principale et l'au moins deuxième outil sont chacun porté par un axe relié au support de manière à être mobile au moins dans une direction verticale par rapport au support indépendamment des autres axes ;
- le deuxième outil est un décompacteur configuré pour, dans la position de service, décompacter le sol ;
- le décompacteur comprend un premier soc configuré pour, dans la position de service, décompacter le sol et ménager ou élargir une fente, une descente de semoir configurée pour, dans la position de service, déposer le premier composé à une première profondeur et au moins une roue secondaire configurée pour, dans la position de service, combler ladite fente et/ou pour limiter la profondeur d'enfoncement du décompacteur et/ou pour limiter le foisonnement de la terre autour de ladite fente ;
- la machine agricole comporte en outre un troisième outil monté sur le support de manière mobile au moins dans une direction verticale, indépendamment des autres outils, de préférence monté à rotation sur le support autour d'un axe horizontal, indépendamment des autres outils ;
- le troisième outil est de préférence un dispositif de semage comprenant un deuxième soc configuré pour, dans la position de service, ménager une fente dans le sol ;
- le deuxième soc est configuré pour ménager une fente dans le sol, le deuxième soc comportant en outre une descente de semoir secondaire configurée pour déposer un deuxième composé dans la fente formée par le deuxième soc ;
- le dispositif de semage comporte un patin configuré pour être en contact glissant avec le sol dans sa position de service de manière à limiter la profondeur d'enfoncement du dispositif de semage et/ou à combler une fente ménagée dans le sol ;
- la position du patin est ajustable et/ou le patin comporte une ou plusieurs cales modifiant l'épaisseur du patin, de sorte à modifier la profondeur d'enfoncement maximale du dispositif de semage ;
- la machine agricole comporte pour chaque dit outil, un organe de déplacement élastique fixé à une extrémité au support et à l'autre extrémité au dit outil de manière à pousser élastiquement ledit outil vers le sol, dans la position de service ;
- le disque d'ouverture comprend au moins une ceinture coaxiale au disque d'ouverture et définissant, dans la position de service, une profondeur d'enfoncement maximale du disque d'ouverture dans le sol ;
- la roue principale comporte sur sa surface de roulement une pluralité d'ailettes configurées pour pincer des végétaux, les ailettes ayant une forme allongée selon une direction allant de l'avant vers l'arrière ou de l'arrière vers l'avant lorsque les ailettes contactent le sol et inclinée vers le plan longitudinal médian vertical (P) ;
- la machine agricole comprend une barre de sarclage disposée devant la roue principale dans la direction d'avancement et configurée pour, dans la position de service, arracher des végétaux ;
- le premier outil et/ou le deuxième outil et/ou le troisième et/ou la roue principale sont montés à rotation sur le support ;
- le premier outil et/ou le deuxième outil et/ou le troisième et/ou la roue principale sont chacun montés sur deux bras secondaires, chacun des bras secondaires étant monté à rotation par rapport au support autour d'un axe horizontal.

L'invention concerne également un procédé de semage au moyen d'une machine agricole selon l'invention, dans lequel on tracte la machine agricole et on dépose au moyen de la descente de semoir le premier composé, de préférence un engrais, de préférence sous forme de granulés et/ou sous forme liquide, à une profondeur supérieure à la profondeur à laquelle on dépose le deuxième composé, de préférence une graine, au moyen de la descente de semoir secondaire.

**Suivant un deuxième mode de réalisation principal,** le premier outil est un disque d'ouverture et la machine agricole comporte encore un décompacteur disposé entre le disque d'ouverture et la roue principale, et un dispositif de semage disposé entre le décompacteur et la roue principale et comportant une descente de semoir secondaire,
le décompacteur étant configuré pour, dans la position de service, s'étendre au-dessus ou de préférence au moins partiellement dans la fente ménagée par le disque d'ouverture pour y déposer un premier composé à une première profondeur, et
le dispositif de semage comportant un deuxième soc configuré pour, dans la position de service, ménager une fente dans le sol à une deuxième profondeur inférieure à la première profondeur de sorte que la descente de semoir secondaire dépose un deuxième composé à la deuxième profondeur.

Ainsi, ce mode de réalisation permet de déposer deux composés différents à deux profondeurs différentes lors d'un unique passage de la machine agricole.

Une machine agricole selon le deuxième mode de réalisation principal de l'invention peut également comporter une ou plusieurs des caractéristiques optionnelles suivantes :
- le deuxième soc comporte un patin configuré pour être en contact glissant avec le sol dans sa position de service de sorte à limiter la profondeur d'enfoncement maximale du dispositif de semage ;
- le décompacteur comporte une descente de semoir et, de préférence derrière la descente de semoir, une roue secondaire configurée pour, dans la position de service, fermer la fente ménagée par le disque d'ouverture et/ou limiter le foisonnement de la terre autour de la fente ménagée par le disque d'ouverture ;
- le décompacteur comporte un premier soc à l'avant de la descente de semoir configuré pour, dans la position de service, décompacter le sol et élargir et/ou approfondir la fente ménagée par le disque d'ouverture.

**Suivant un troisième mode de réalisation principal,** la machine agricole comporte encore un patin de sarclage disposé entre le disque d'ouverture et la roue de fermeture principale, le patin de sarclage étant configuré pour, dans la position de service, sarcler des végétaux.

Avantageusement, cela permet de réaliser un travail de la terre au cours même du passage de la machine agricole utilisée comme semoir, évitant ainsi d'avoir à réaliser ce travail préalablement.

Une machine agricole selon le troisième mode de réalisation principal de l'invention peut également comporter une ou plusieurs des caractéristiques optionnelles suivantes :
- le patin de sarclage a une forme de chevron, la pointe du chevron étant orientée dans la direction d'avancement ;
- dans la position de service, le patin de sarclage est agencé pour pénétrer dans le sol, de préférence pour être disposé immédiatement sous la surface du sol, de préférence à une profondeur inférieure à 10 cm, à 5 cm, à 3 cm ou à 1 cm.

**Suivant un quatrième mode de réalisation principal de l'invention,** la machine agricole comporte encore un premier dispositif de semage disposé entre le disque d'ouverture et la roue de fermeture principale, le premier dispositif de semage comprenant un premier soc, une descente de semoir et, disposée derrière la descente de semoir, une roue d'appui configurée, dans la position de service, pour fermer la fente ménagée par le disque d'ouverture et/ou limiter le foisonnement de la terre autour de la fente élargie par le premier soc .

**Suivant un cinquième mode de réalisation principal de l'invention,** le premier outil est de préférence configuré pour ménager une fente dans le sol et la machine agricole comporte un dispositif configuré pour limiter le foisonnement de la terre autour de la fente ménagée par le premier outil, le dispositif comportant un patin configuré pour, dans la position de service, être en contact glissant avec le sol, de préférence de sorte à limiter ledit foisonnement de part et d'autre du premier outil, et/ou le dispositif comportant au moins une roue secondaire configurée pour, dans la position de service, exercer une pression sur le sol autour de ladite fente de sorte à limiter ledit foisonnement. De préférence, il comporte une roue secondaire de part et d'autre du premier outil, de manière à limiter le foisonnement de chaque côté du premier outil.

Le patin s'étend de part et d'autre du premier outil. Ainsi, le patin limite le foisonnement de la terre des deux côtés du premier outil.

De préférence, le dispositif est monté sur le premier outil.

De préférence encore, le premier outil est monté sur deux bras, eux-mêmes montés sur le support, formant un parallélogramme. Cette configuration permet de garantir le maintien de la position horizontale du premier outil.

De manière équivalente, la roue secondaire, ou chaque roue secondaire, peut être remplacée par une chenille.

Avantageusement, ce mode de réalisation permet d'éviter ou du moins de minimiser le foisonnement de la terre lors d'opérations de semage nécessitant l'aménagement d'une ou de plusieurs fentes dans le sol. Le foisonnement de la terre est susceptible de faire lever des graines de végétaux dont le développement est indésirable. La limitation du foisonnement permet de limiter le développement de mauvaises herbes.

Avantageusement encore, le patin et/ou la roue secondaire permet de limiter l'enfoncement maximale de l'outil portant le dispositif.

Une machine agricole selon le cinquième mode de réalisation principal de l'invention peut également comporter une ou plusieurs des caractéristiques optionnelles suivantes :
- la roue secondaire est inclinée par rapport au plan vertical médian d'un angle compris entre 10° et 45°, de préférence 30° ;
- le dispositif comporte une deuxième roue secondaire disposée symétriquement à la première roue secondaire par rapport au plan vertical médian ;
- la position du patin sur le dispositif est ajustable, de préférence au moyen de crans ou par un vérin ;
- le patin comporte une ou plusieurs cales modifiant l'épaisseur du patin ;
- le patin a une forme généralement plate avec à l'avant une section inclinée vers le haut ;
- le premier outil est un disque d'ouverture ou un dispositif de semage comportant un soc.

**Suivant un sixième mode de réalisation principal de l'invention,** la machine agricole comporte, devant la roue principale selon la direction d'avancement, une barre de sarclage configurée pour arracher des végétaux.

Plus précisément, la machine agricole selon ce mode de réalisation comporte un support destiné à être tracté par un engin agricole selon une direction d'avancement, la machine agricole comportant :
- une roue principale montée sur le support ;
- une barre de sarclage agencée devant la roue principale selon la direction d'avancement à une distance inférieure à 10 cm, de préférence inférieure à 5 cm, à 3 cm ou à 1 cm, configurée pour arracher des végétaux et configurée pour être agencée en-dessous du sol dans la position de service, de préférence à une profondeur inférieure à 4 cm, à 3 cm, à 2 cm ou à 1 cm ;
- un disque d'ouverture monté à rotation sur le support et agencé devant le dispositif de semage selon la direction d'avancement de manière à ménager une fente dans le sol et/ou à couper des végétaux.

La barre de sarclage peut être configurée pour être au niveau du sol ou en-dessous du sol dans sa position de service, de préférence à une profondeur inférieure à 4 cm, à 3 cm, à 2 cm, ou à 1 cm, de sorte que la barre de sarclage arrache les végétaux situés sur son trajet. De manière avantageuse, la barre de sarclage coopère avec la roue principale : la roue principale, en pinçant les végétaux contre le sol, facilite l'arrachage des végétaux par la barre de sarclage.

Une machine agricole selon le sixième mode de réalisation principal de l'invention peut également comporter une ou plusieurs des caractéristiques optionnelles suivantes :
- la barre de sarclage est amovible ;
- la roue principale comporte sur sa surface une pluralité d'ailettes configurées pour pincer des végétaux ;
- les ailettes de la roue principale sont réparties en deux groupes chacun disposé sur une moitié de la surface de roulement de la roue principale séparée de l'autre moitié par un plan longitudinal médian vertical passant par le centre de la roue principale ;
- les ailettes ont une forme allongée selon une direction allant, depuis le plan longitudinal médian, toutes de l'avant vers l'arrière lorsque les ailettes contactent le sol, et inclinée d'un angle α avec ledit plan longitudinal médian ;
- les ailettes ont une forme allongée selon une direction allant, depuis le plan longitudinal médian, toutes de l'arrière vers l'avant lorsque les ailettes contactent le sol, et inclinée d'un angle α avec ledit plan longitudinal médian ;
- les ailettes sont des ailettes radiales et ont une forme allongée selon une direction perpendiculaire au plan vertical médian ;
- l'angle α est de préférence supérieur à 10°, 20°, 30°, 40° et/ou inférieur à 80°, 70°, 60°, 50°, de préférence égal à 45° ;
- les deux groupes d'ailettes sont disposés en regard l'un de l'autre, symétriques par rapport au plan longitudinal médian ;
- les deux groupes d'ailettes sont décalés ;
- la barre de sarclage 36 a une forme généralement rectangulaire dans un plan horizontal, allongée selon une direction transversale ;
- la barre de sarclage a une forme de chevron pointant vers l'arrière ;
- la barre de sarclage a, sur un côté du plan longitudinal médian P, une forme rectangulaire et sur l'autre côté du plan longitudinal médian une forme de demi-chevron inversé ;
- la barre de sarclage a une forme de chevron pointant vers l'arrière, les deux branches du chevron étant séparées et formant deux pièces distinctes définissant une ouverture centrale.

L'invention concerne également une roue de fermeture comportant sur sa surface une pluralité d'ailettes, les ailettes de la roue de fermeture étant réparties en deux groupes chacun disposé sur une moitié de la surface de roulement de la roue de fermeture séparée de l'autre moitié par un plan longitudinal médian vertical passant par le centre de la roue de fermeture, les ailettes ayant une forme allongée selon une direction allant, depuis le plan longitudinal médian, toutes de l'avant vers l'arrière ou toutes de l'arrière vers l'avant lorsque les ailettes contactent le sol, et inclinée d'un angle α avec ledit plan longitudinal médian.

La roue de fermeture selon l'invention peut également comporter une ou plusieurs des caractéristiques optionnelles suivantes :
- l'angle α est de préférence supérieur à 10°, 20°, 30°, 40° et/ou inférieur à 80°, 70°, 60°, 50°, de préférence égal à 45° ;
- les ailettes ont une forme allongée selon une direction allant de l'avant vers l'arrière lorsque les ailettes contactent le sol et inclinée vers ledit plan longitudinal médian, formant un angle α avec le plan longitudinal médian, l'angle α étant de préférence supérieur à 10°, 20°, 30°, 40° et/ou inférieur à 80°, 70°, 60°, 50°, de préférence égal à 45° ;
- les deux groupes d'ailettes sont disposés en regard l'un de l'autre, symétriques par rapport au plan longitudinal médian ;
- les deux groupes d'ailettes sont décalés.

Bien entendu, les modes de réalisation et les caractéristiques optionnelles des différents modes de réalisation principaux peuvent être combinés.

### Brève description des dessins

[Fig 1] La figure 1 illustre schématiquement, vue de côté, une machine agricole selon l'invention dont les outils sont disposés dans la position de service.
[Fig 2] La figure 2 représente, vu de côté, une machine agricole selon l'invention dont les outils sont disposés dans une position de retrait.
[Fig 3] La figure 3 est une vue en perspective de la machine agricole de la figure 1.
[Fig 4] La figure 4 est une vue schématique de côté d'une machine agricole selon l'invention.
[Fig 5] La figure 5 représente la machine agricole de la figure 4 selon une vue en perspective.
[Fig 6] La figure 6 représente la machine agricole de la figure 4 selon une autre perspective.
[Fig 7] La figure 7 illustre schématiquement une machine agricole selon l'invention.
[Fig 8] La figure 8 est une vue en perspective de la machine agricole de la figure 7.
[Fig 9] La figure 9 est une vue en perspective de la machine agricole de la figure 7.
[Fig 10] La figure 10 est une vue en perspective d'une machine agricole selon l'invention.
[Fig 11] La figure 11 est une autre vue de la machine agricole de la figure 10.
[Fig 12] La figure 12 représente en vue de côté une machine agricole selon l'invention.
[Fig 13] La figure 13 illustre un mode de réalisation d'une machine agricole selon l'invention vue de côté.
[Fig 14] La figure 14 est une vue en perspective de la machine agricole de la figure 13.
[Fig 15] La figure 15 est une autre vue en perspective de la machine agricole de la figure 13.
[Fig 16] La figure 16 est une vue schématique de côté d'une machine agricole selon l'invention.
[Fig 17] La figure 17 est une vue schématique de côté d'une machine agricole selon l'invention, les outils étant placés dans la position de service.
[Fig 18] La figure 18 est une vue schématique de côté de la machine agricole de la figure 17, l'un des outils étant placé dans une position de retrait.
[Fig 19] La figure 19 illustre schématiquement une machine agricole selon l'invention.
[Fig 20] La figure 20 illustre schématiquement une machine agricole selon l'invention.
[Fig 21] La figure 21 est une vue en perspective de la machine agricole de la figure 20.
[Fig 22] La figure 22 illustre une roue principale selon l'invention.
[Fig 23] La figure 23 est une vue de face de la roue de la figure 22.
[Fig 24] La figure 24 est une vue de profil de la roue de la figure 22.
[Fig 25] La figure 25 est une vue en coupe de la roue de la figure 22.
[Fig 26] La figure 26 est une vue en perspective d'une roue principale selon l'invention.
[Fig 27] La figure 27 est une vue de profil de la roue principale de la figure 26.
[Fig 28] La figure 28 est une vue de face de la roue principale de la figure 26.
[Fig 29] La figure 29 illustre un patin et une cale de patin selon l'invention.
[Fig 30] La figure 30 représente la cale de patin de la figure 29 montée sur le patin.
[Fig 31] La figure 31 est une vue de profil d'une machine agricole selon l'invention.

Dans les différentes figures, des organes identiques ou analogues sont désignés par des références identiques.

### Définitions

La « position de service » est classiquement la position dans laquelle la machine agricole est tirée par un engin agricole, classiquement un tracteur, sur un sol sensiblement horizontal. Le sol est considéré comme suffisamment ferme pour éviter l'enfoncement des pièces prévues pour y prendre appui comme les roues de fermeture. Les outils portés par la machine agricole sont dits en position de service lorsqu'ils sont disposés au niveau du sol de sorte à remplir leurs fonctions, par exemple ouverture ou élargissement d'une fente dans le sol, dépôt de composés, fermeture de fentes...

Une « position de retrait » est une position dans laquelle un ou plusieurs outils portés par la machine agricole sont disposés en retrait du sol, c'est-à-dire disposés au-dessus du sol de sorte à ne pas être en contact avec le sol.

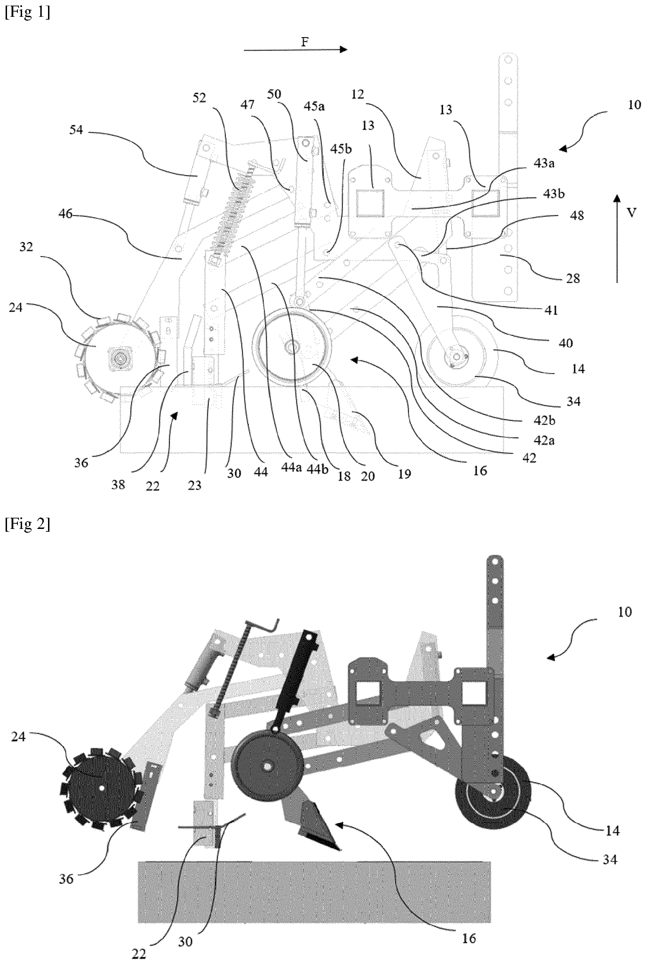

La direction d'avancement ou « direction longitudinale » est la direction orientée F (figure 1) selon laquelle la machine agricole est prévue pour être tractée dans la position de service.

Une distance ou une dimension « longitudinales » sont mesurées selon la direction d'avancement. Les longueurs sont mesurées selon la direction d'avancement.

Un plan longitudinal est un plan vertical parallèle à la direction d'avancement.

Le plan longitudinal médian est le plan longitudinal dans lequel le disque d'ouverture s'étend.

La flèche référencée « V » est verticale et pointe vers le haut.

Un plan transversal est un plan perpendiculaire à la direction d'avancement F.

Une direction « transversale » T est une direction horizontale et dans un plan transversal. Les épaisseurs sont mesurées selon une direction transversale. Une distance ou une dimension « transversales » sont mesurées selon une direction transversale.

Dans la présente description, les adjectifs « inférieur », « supérieur », « horizontal », « vertical », « devant », « derrière », « avant », « arrière », « droite », « gauche » et « latéral » sont définis par rapport à la direction d'avancement (la flèche F pointe donc vers « l'avant »).

Un « contact glissant » entre deux éléments est un contact selon lequel, dans la zone de contact, les deux éléments ne sont pas immobiles l'un par rapport à l'autre.

Les adjectifs « principal » et « secondaire » sont utilisés à des fins de clarté seulement.

### Description détaillée

Comme représenté sur les figures 1 et 2, dans un mode de réalisation préféré, une machine agricole 10 selon l'invention comporte un support 12 destiné à être fixé sur une ou plusieurs poutres transversales 13 et sur lequel sont successivement montés, depuis l'avant vers l'arrière, un disque d'ouverture 14, un décompacteur 16, un dispositif de semage 22 et une roue principale 24. Le disque d'ouverture, le décompacteur, le dispositif de semage et la roue principale sont chacun montés sur un bras respectif 40, 42, 44, 46. Les bras 40, 46 supportant le disque d'ouverture et la roue principale sont montés à rotation par rapport au support autour d'un axe horizontal 41, 47. Les bras 42, 44 supportant le décompacteur 16 et le dispositif de semage 22 sont chacun montés sur deux bras secondaires 42a, 42b, 44a, 44b, chacun des bras secondaires étant monté à rotation par rapport au support autour d'un axe horizontal 43a, 43b, 45a, 45b. Le décompacteur 16 peut également être un fissurateur configuré pour fissurer le sol. Plus généralement, dans le cadre de l'invention, le décompactage de sol peut être remplacé ou combiné avec de la fissuration de sol.

De façon avantageuse, cette configuration en parallélogramme permet de garder l'orientation verticale du décompacteur et du dispositif de semage sensiblement constante lors de la rotation des bras secondaires. En outre, lors du déplacement des outils montés avec cette configuration, la pente de montée ou de descente des outils peut avantageusement être supérieure à 60%, de préférence supérieure à 80%.

Les rotations des différents outils sont indépendantes les unes des autres, c'est-à-dire que la rotation d'un outil n'entraine pas la rotation des autres outils. Les bras 40, 42, 44, 46 sont soumis à une poussée élastique, qui les pousse vers le sol, par les organes élastiques 48, 50, 52, 54, par exemple des vérins hydrauliques ou pneumatiques et/ou des ressorts hélicoïdaux.

Ainsi, les outils peuvent être montés sur un bras lui-même monté sur le support ou peuvent être montés sur deux bras secondaires montés sur le support, formant un parallélogramme dont deux articulations adjacentes sont immobilisées sur le support.

Le décompacteur 16 comporte une descente de semoir 18, un premier soc 19 et une roue secondaire 20. Le dispositif de semage 22 comporte un soc secondaire 23, un patin 30 et une descente de semoir secondaire 38.

Ainsi, la machine agricole 10 comporte dans ce mode de réalisation quatre outils, chacun monté sur le support 12 de manière mobile entre la position de service, illustrée sur la figure 1, et une position de retrait, illustrée sur la figure 2, dans laquelle les outils sont éloignés du sol.

De préférence, les outils s'étendent sensiblement dans un plan commun, de préférence vertical, de préférence dans le plan longitudinal médian.

Indépendamment les uns des autres, les outils peuvent être déplacés notamment dans une direction verticale à l'encontre des organes élastiques 48, 50, 52, 54 et bloqués hors de leur position de service. Cela permet avantageusement de mettre sélectivement en oeuvre les différents outils portés par la machine agricole. Ainsi, n'importe quelle combinaison d'outils peut être placée dans la position de service.

Les différentes pièces de la machine agricole, notamment le disque d'ouverture et/ou la descente de semoir et/ou le deuxième soc, peuvent comporter ou être en particulier en un acier à haute limite élastique, ou « HLE », ou en inox. Ces pièces peuvent être renforcées localement avec du carbure de tungstène et/ou de la soudure anti-abrasion.

Le disque d'ouverture 14, d'axe X sensiblement horizontal, est destiné, en position de service et quand la machine agricole est tractée selon la direction d'avancement, à ménager une fente étroite dans le sol et/ou à couper les végétaux se trouvant sur le trajet du disque d'ouverture.

Le décompacteur 16 est destiné à décompacter le sol. Il peut avantageusement approfondir et élargir la fente étroite. Dans un mode de réalisation préféré, il comporte une descente de semoir 18 et permet de guider un composé, classiquement des graines ou un engrais, jusqu'au fond de la fente. De préférence, la descente de semoir 18 du décompacteur 16 est introduite dans la fente de manière à déboucher à proximité du fond de la fente. La roue secondaire 20, optionnelle, est destinée à fermer la fente ménagée par le premier soc. En exerçant un appui sur le sol, elle permet également de limiter la profondeur d'enfoncement du premier soc et limite ainsi la profondeur de la fente ménagée par le premier soc. De préférence, la roue secondaire 20 peut s'enfoncer dans le sol à une profondeur inférieure à 2 cm, de préférence encore inférieure à 4 cm ou à 6 cm. Elle peut également permettre de maintenir la terre autour de la fente afin de limiter le foisonnement de la terre. De préférence, on dispose deux roues secondaires de façon symétrique par rapport au plan vertical médian. Selon une variante préférée, la roue secondaire est inclinée d'un angle compris entre 10° et 45° par rapport au plan vertical médian, avantageusement 30°. De préférence, la roue d'appui est maintenue contre le sol par l'organe de poussée élastique 50.

Le deuxième soc 23 du dispositif de semage 22 est destiné à ménager une fente secondaire dont la profondeur est inférieure à celle à laquelle le composé est déposé dans la fente étroite. La fente secondaire est donc moins profonde que la fente ménagée par le premier soc. Le dispositif de semage 22 peut avantageusement comporter un patin 30 destiné à combler au moins en partie la fente formée par le premier soc 19 et/ou à limiter la profondeur d'enfoncement du dispositif de semage 22. Il peut également comporter une descente de semoir secondaire 38.

La roue principale 24 est destinée à refermer la fente ménagée par le deuxième dispositif de semage 22. Comme on le verra plus loin, la roue principale comporte avantageusement des ailettes 32 qui permettent de pincer les végétaux situés sur le trajet de la roue principale et/ou d'améliorer la fermeture de la fente ménagée par le dispositif de semage secondaire 22. En fonction de l'orientation des ailettes 32 et donc de la roue principale 24, on peut avantageusement favoriser l'une ou l'autre de ces fonctions. La roue principale est de préférence configurée pour s'enfoncer dans le sol à une profondeur inférieure à 1 cm, de préférence encore inférieure à 2 cm ou à 4 cm.

### Support

Le support 12, qui peut être constitué par une ou plusieurs pièces, est la structure qui permet de solidariser les outils à l'étançon 28. L'étançon 28 comporte classiquement des moyens de fixation, non représentés, à un engin agricole, classiquement un tracteur et peut notamment être solidarisé au support par une ou plusieurs poutres transversales 13.

### Disque d'ouverture

Le disque d'ouverture 14 est de préférence de forme générale discoïdale afin d'assurer l'ouverture d'une fente étroite principale continue. Le disque d'ouverture est monté à rotation, de préférence libre, sur le support 12 autour d'un axe transversal horizontal. Dans un mode de réalisation, il s'étend dans un plan sensiblement vertical, ce qui facilite sa pénétration dans la terre.

Le disque d'ouverture 14 présente de préférence un diamètre supérieur à 10 cm, supérieur à 20 cm, supérieur à 30 cm, supérieur à 40 cm, supérieur à 50 cm, supérieur à 60 cm, voire supérieur à 100 cm, supérieur à 150 cm, et/ou inférieur à 250 cm, un diamètre de 30 cm étant préféré.

L'épaisseur du disque d'ouverture 14, mesurée à 10 mm de son bord périphérique, est de préférence inférieure à 20 mm, de préférence inférieure à 15 mm, de préférence inférieure à 10 mm, de préférence inférieure à 8 mm, voire inférieure à 5 mm, voire inférieure à 3 mm, voire inférieure à 2 mm, et/ou supérieure à 1 mm. De préférence encore, le bord périphérique du disque d'ouverture 14 est effilé.

Dans un mode de réalisation préféré, le disque d'ouverture 14 porte une ou deux ceintures cylindriques 34 coaxiales au disque d'ouverture 14 de diamètre inférieur au disque d'ouverture 14 et conformées pour prendre appui à plat sur le sol et limiter mécaniquement l'enfoncement du disque d'ouverture dans le sol au-delà d'une profondeur maximale d'enfoncement Pₘₐₓ. Les ceintures 34 agissent donc en tant que limiteurs de profondeur.

La profondeur d'enfoncement maximale Pₘₐₓ est de préférence supérieure à 0,5 cm, de préférence supérieure à 3 cm, de préférence supérieure à 5 cm, de préférence supérieure à 7 cm, de préférence supérieure à 10 cm, de préférence supérieure à 13 cm et/ou inférieure à 30 cm, de préférence inférieure à 25 cm, de préférence inférieure à 20 cm, de préférence inférieure à 17 cm, une profondeur d'enfoncement maximale de 5 cm étant bien adaptée.

### Décompacteur

Le décompacteur 16 est destiné à décompacter le sol et, avantageusement, à l'introduction du composé, de préférence des graines et/ou des fertilisants, dans la fente principale. Il est constitué par la ou les pièces qui, dans la position de service, sont logées, au-dessus ou au moins partiellement dans la fente étroite.

Le décompacteur 16 comporte un premier soc 19 destiné à fendre le sol à une profondeur supérieure à celle de la fente étroite formée par le disque d'ouverture 14.

Derrière le premier soc 19 est agencée la descente de semoir 18 et, optionnellement, la roue secondaire 20.

### Descente de semoir

La descente de semoir 18, qui présente de préférence la forme générale d'un tube, débouche par une ouverture supérieure et par une ouverture inférieure. L'ouverture supérieure est destinée à être mise en communication avec une source du composé à déposer, par exemple un réservoir de graines ou de produit phytosanitaire (non représenté), qui peut être notamment solidaire de l'engin de traction ou du support 12. L'ouverture inférieure est destinée à être disposée dans la fente étroite. De préférence, la descente de semoir 18, qui est plus profonde que la descente de semoir secondaire 38, est configurée pour le dépôt d'un engrais, de préférence sous la forme de granulés ou sous forme liquide.

Le diamètre équivalent de la descente de semoir principale est de préférence supérieur à 2 mm, 5 mm, de préférence supérieur à 8 mm, voire supérieur à 10 mm et/ou inférieur à 100 mm, de préférence inférieur à 40 mm, à 30 mm, de préférence inférieur à 25 mm.

### Roue secondaire

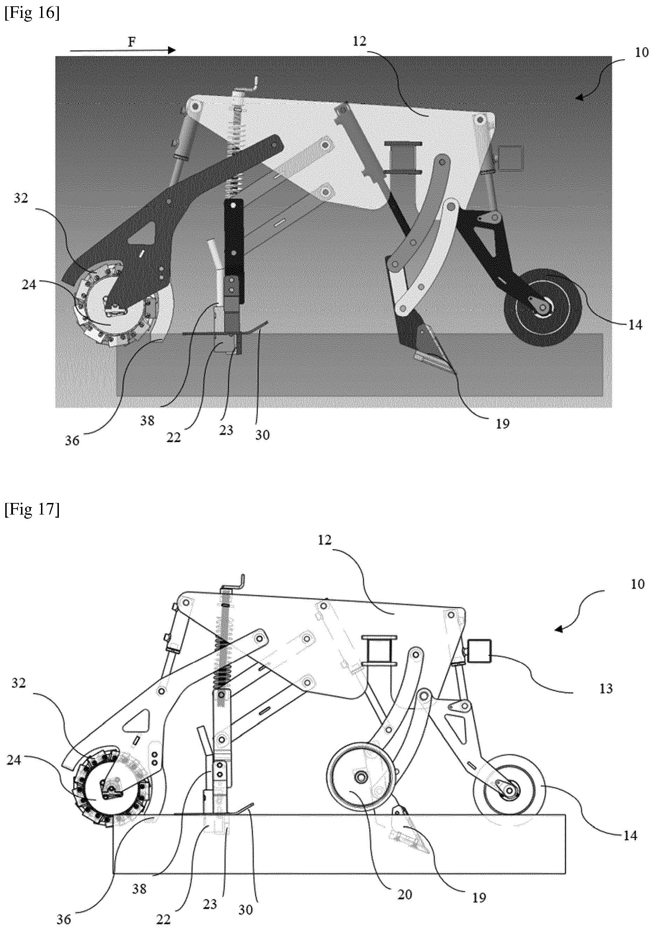

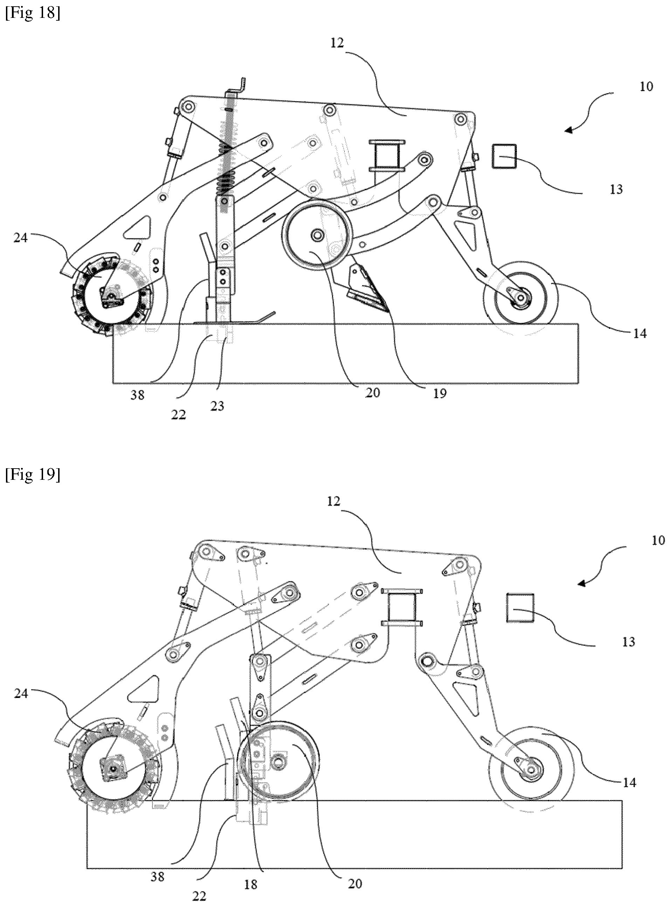

La roue secondaire 20, de préférence inclinée à 30° par rapport au plan vertical médian, est destinée à combler la fente ménagée par le premier soc 19. Avantageusement, elle permet également de limiter la profondeur d'enfoncement du premier soc. Elle peut en outre limiter le foisonnement de la terre autour de la fente étroite dans laquelle le composé a été déposé. A cet effet, elle est disposée à proximité du premier soc, comme sur la figure 19. La roue secondaire 20 peut aussi service à fermer la fente étroite dans laquelle le composé a été déposé. A cet effet, elle est disposée derrière le premier soc, comme sur la figure 17.

La roue secondaire 20 est classiquement montée à rotation, de préférence libre, sur le support. Dans un mode de réalisation préféré, la roue secondaire 20 est montée sur une suspension, par exemple comportant un vérin 50, notamment hydraulique ou pneumatique, par vis ou ressort. Elle peut toutefois être montée de façon rigide, avec ou sans réglage de sa position par des crans. La suspension est de préférence conformée pour presser élastiquement la roue secondaire 20 sur le sol. En appuyant sur le sol, la roue secondaire 20 permet avantageusement de limiter la profondeur d'enfoncement de la descente de semoir 18.

La roue secondaire 20 présente de préférence un diamètre supérieur à 10 cm, de préférence supérieur à 20 cm, de préférence supérieur à 25 cm, voire supérieur à 50 cm, supérieur à 75 cm, supérieur à 90 cm, et/ou inférieur à 100 cm.

La largeur de la roue secondaire 20, mesurée transversalement, est de préférence supérieure à 1 cm, de préférence supérieure à 2 cm, de préférence supérieure à 3 cm, de préférence encore supérieure à 4 cm, de préférence supérieure à 5 cm et /ou inférieure à 10 cm, de préférence inférieure à 8 cm.

### Dispositif de semage

Le dispositif de semage 22 comporte un deuxième soc 23 destiné à ouvrir une fente secondaire ayant une profondeur inférieure à la profondeur de dépôt du composé par la descente de semoir 18.

Avantageusement, le dispositif de semage 22 comporte un patin 30 destiné à limiter sa profondeur d'enfoncement et, avantageusement, à combler la fente formée par le premier soc 19. Le patin 30 est configuré pour être en contact glissant avec le sol dans sa position de service et a une forme généralement plate avec à l'avant une section inclinée vers le haut. La section plate s'oppose à un enfoncement dans le sol et limite ainsi l'enfoncement du dispositif de semage dans le sol. La section inclinée permet d'aplatir le foisonnement de terre dans le sillage du premier soc 19. Le patin 30 peut également permettre d'aplatir les végétaux sur son trajet. L'aplatissement des végétaux facilite leur pincement par les ailettes 32 de la roue de fermeture principale 24.

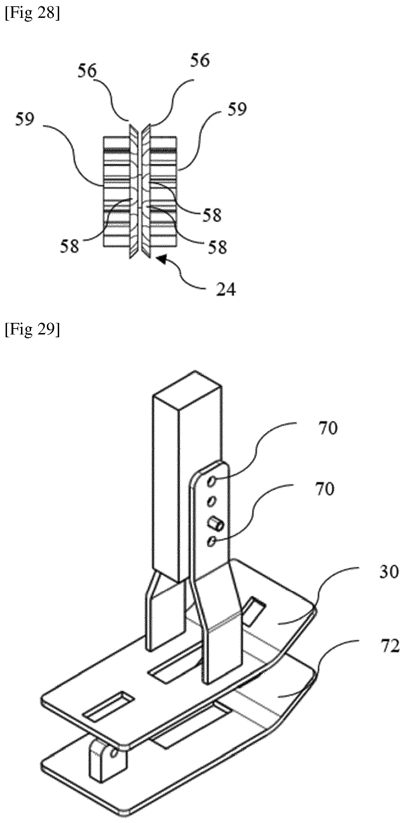

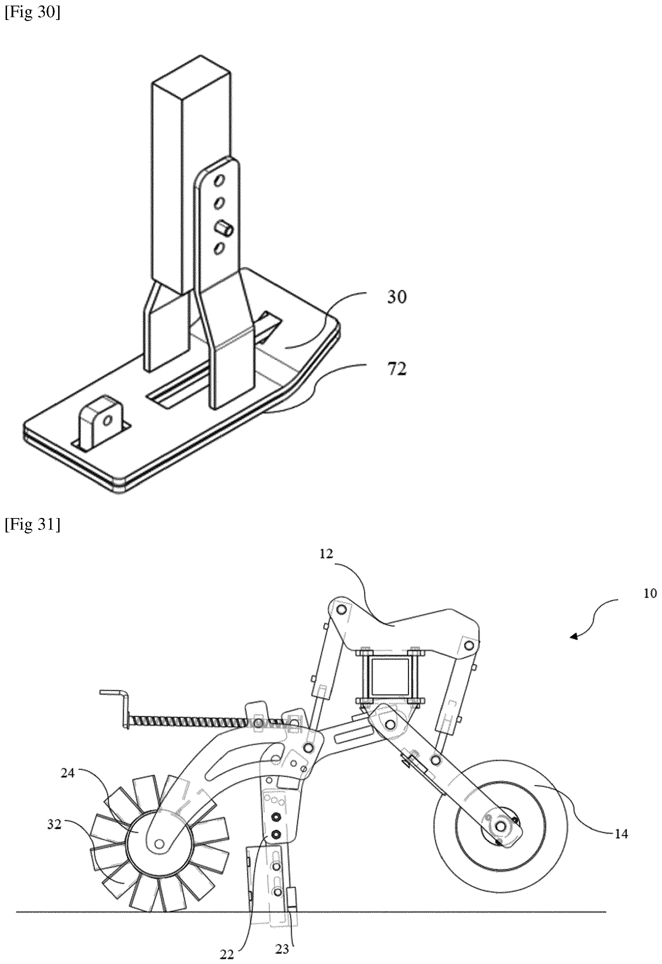

De préférence, la position du patin 30 est ajustable, ce qui permet de modifier la profondeur d'enfoncement maximale du dispositif de semage ou de n'importe quel outil comportant un patin 30. Comme représenté aux figures 29 et 30, le patin 30 peut être fixé par des crans dans des ouvertures 70 disposées à des hauteurs différentes sur le support du patin. De préférence encore, des cales 72 peuvent être fixées sur une surface inférieure du patin 30 de sorte à modifier l'épaisseur du patin. Cela permet également de modifier la profondeur d'enfoncement maximale du dispositif de semage ou de n'importe quel outil comportant un patin 30.

Avantageusement encore, le dispositif de semage 22 comporte, sur son côté arrière, une descente de semoir secondaire 38 configurée pour le dépôt d'un deuxième composé dans la fente secondaire, le deuxième composé étant de préférence une graine. La descente de semoir secondaire 38 permet en effet de déposer le deuxième composé à une profondeur inférieure à celle du composé déposé par la descente de semoir 18 : il est particulièrement avantageux de déposer des graines au-dessus d'un engrais.

Dans un mode de réalisation préférentiel, la machine agricole comporte une troisième descente de semoir configurée pour déposer un troisième composé sur le sol. Dans ce mode de réalisation, on peut avantageusement déposer trois composés à trois profondeurs différentes, par exemple à des profondeurs respectives de 15 cm, 6 cm et 0 cm.

### Roue principale

La roue principale 24, de préférence sensiblement verticale, est destinée dans le mode de réalisation de la figure 1, à fermer une fente formée dans le sol. Dans le mode de réalisation de la figure 1, il s'agit de la fente secondaire formée par le deuxième soc 23.

La roue principale 24 est classiquement montée à rotation, de préférence libre, sur le support.

La roue principale 24 présente de préférence un diamètre supérieur à 10 cm, de préférence supérieur à 20 cm, de préférence supérieur à 25 cm, voire supérieur à 50 cm, supérieur à 75 cm, supérieur à 90 cm, et/ou inférieur à 100 cm.

La largeur de la roue principale 24, mesurée transversalement, est de préférence supérieure à 1 cm, de préférence supérieure à 2 cm, de préférence supérieure à 3 cm, de préférence encore supérieure à 4 cm, de préférence supérieure à 50 cm et /ou inférieure à 10 cm, de préférence inférieure à 8 cm, idéalement de 25 cm.

Suivant le deuxième mode de réalisation principal, la roue principale 24 comporte sur sa surface une pluralité d'ailettes 32.

En fonction de leur orientation, les ailettes 32 sont destinées à pincer d'éventuels végétaux dont la présence est indésirable et/ou à améliorer la fermeture de la fente secondaire ouverte par le deuxième soc.

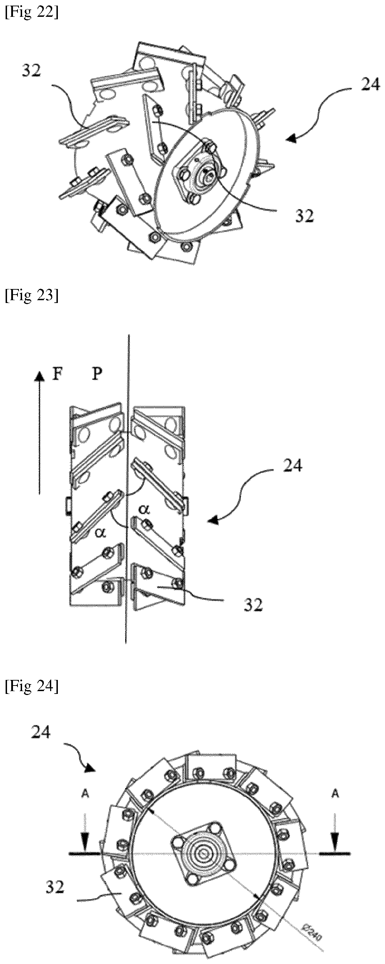

Les figures 22 à 25 détaillent un mode de réalisation d'une roue principale comportant des ailettes 32. De préférence, les ailettes 32 de la roue de fermeture principale sont réparties en deux groupes, chacun disposé sur une moitié de la surface de la roue de fermeture principale 24 séparée de l'autre moitié selon le plan longitudinal médian P passant par le centre de la roue principale.

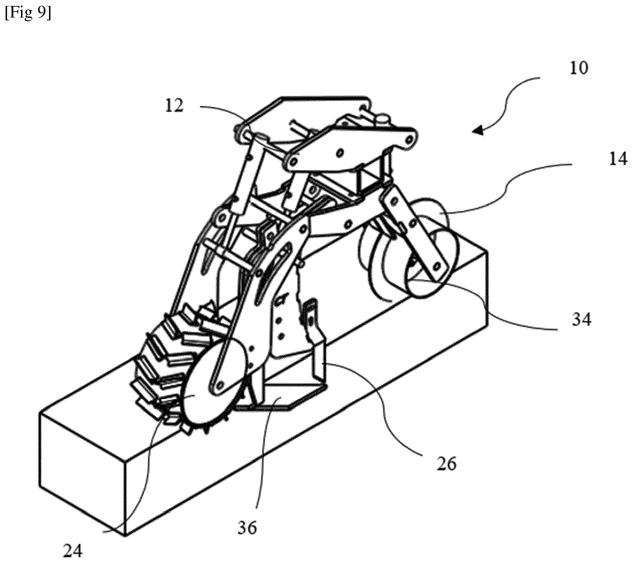

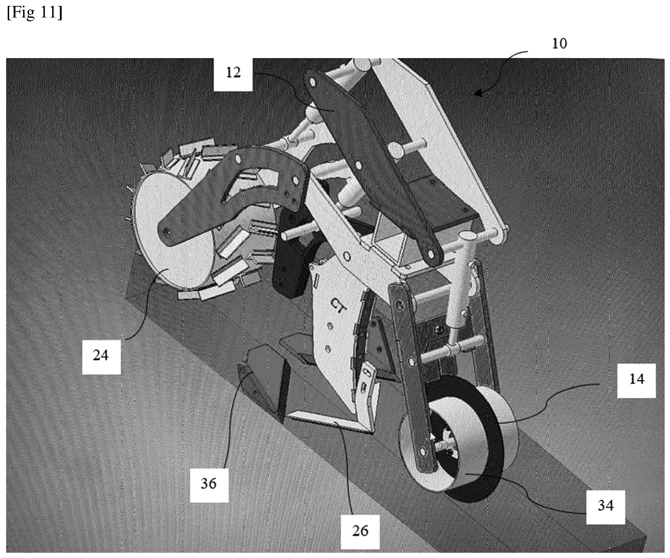

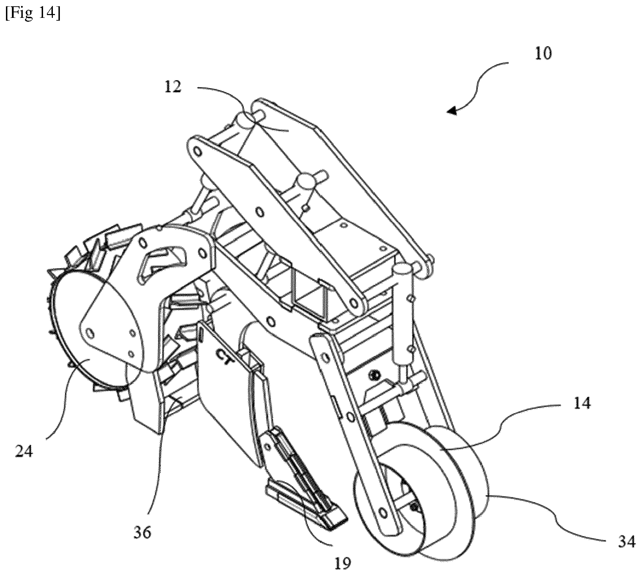

Avantageusement, les ailettes ont une forme allongée selon une direction allant de l'arrière vers l'avant lorsque les ailettes contactent le sol et inclinée vers le plan longitudinal médian P, formant un angle α avec le plan longitudinal médian, l'angle α étant de préférence supérieur à 10°, 20°, 30°, 40° et/ou inférieur à 80°, 70°, 60°, 50°, de préférence égal à 45°. Selon un mode de réalisation préféré, les deux groupes d'ailettes sont symétriques par rapport au plan longitudinal médian P comme par exemple visible sur la figure 9, sur la figure 11 ou encore sur la figure 14. Alternativement, les groupes d'ailettes sont décalés et ne sont pas symétriques par rapport au plan longitudinal médian, comme par exemple visible sur la figure 22. Une orientation des ailettes 32 vers l'avant permet avantageusement d'améliorer l'efficacité du pincement de végétaux par les ailettes et ainsi d'améliorer l'efficacité de l'arrachement.

Selon un mode de réalisation alternatif, les ailettes 32 ont une forme allongée selon une direction allant de l'avant vers l'arrière lorsque les ailettes contactent le sol et inclinée vers le plan longitudinal médian P, formant un angle α avec le plan longitudinal médian, l'angle α étant de préférence supérieur à 10°, 20°, 30°, 40° et/ou inférieur à 80°, 70°, 60°, 50°, de préférence égal à 45°. De préférence, l'orientation d'un groupe d'ailettes est symétrique de l'orientation de l'autre groupe d'ailettes par rapport au plan longitudinal médian P. Alternativement, les groupes d'ailettes sont décalés et ne sont pas symétriques rapport au plan longitudinal médian. Une orientation des ailettes 32 vers l'arrière permet avantageusement d'améliorer la fermeture d'une fente en facilitant déplaçant la terre vers le plan vertical médian, améliorant ainsi le comblement de la fente d'une ligne de semis.

Avantageusement, en fonction du sens de montage de la roue principale 24, il est possible de modifier l'orientation des ailettes, et donc de changer l'action privilégiée de la roue de fermeture principale 24. Il suffit donc de changer le sens de montage de la roue principale 24 pour favoriser le pincement de végétaux ou le comblement d'une fente.

Les ailettes 32 peuvent ainsi permettent de pincer les végétaux. Cela permet notamment de hacher une partie supérieure des végétaux au-dessus du sol sans affecter la partie supérieure. Cela est par exemple avantageux pour couper une partie supérieure de la luzerne sans détruire la plante, ce qui permet de garder la plante vivante tout en empêchant sa compétition avec une culture telle que du blé. Cela est également avantageux pour éviter l'effet dit de mèche ou de cheminée, dans lequel l'humidité du sol remonte par capillarité dans le corps de végétaux coupés, par exemple dans le chaume du blé. En coupant le chaume, on évite l'assèchement du sol par cet effet de mèche. De plus, le chaume pincé sur le sol protège le sol humide de l'exposition au soleil et favorise ainsi le maintien du taux d'humidité du sol.

La roue principale 24 peut également comporter une barre de sarclage 36 agencée devant la roue principale selon la direction d'avancement. La barre de sarclage 36 est configurée pour être au niveau du sol ou légèrement en-dessous du sol dans sa position de service, de préférence à une profondeur de 1 cm, de sorte que la barre de sarclage 36 arrache les végétaux situés sur son trajet. De manière avantageuse, la barre de sarclage 36 coopère avec la roue principale 24 : les ailettes 32 de la roue principale facilitent l'arrachage des végétaux par la barre de sarclage en pinçant les végétaux entre la roue principale et le sol.

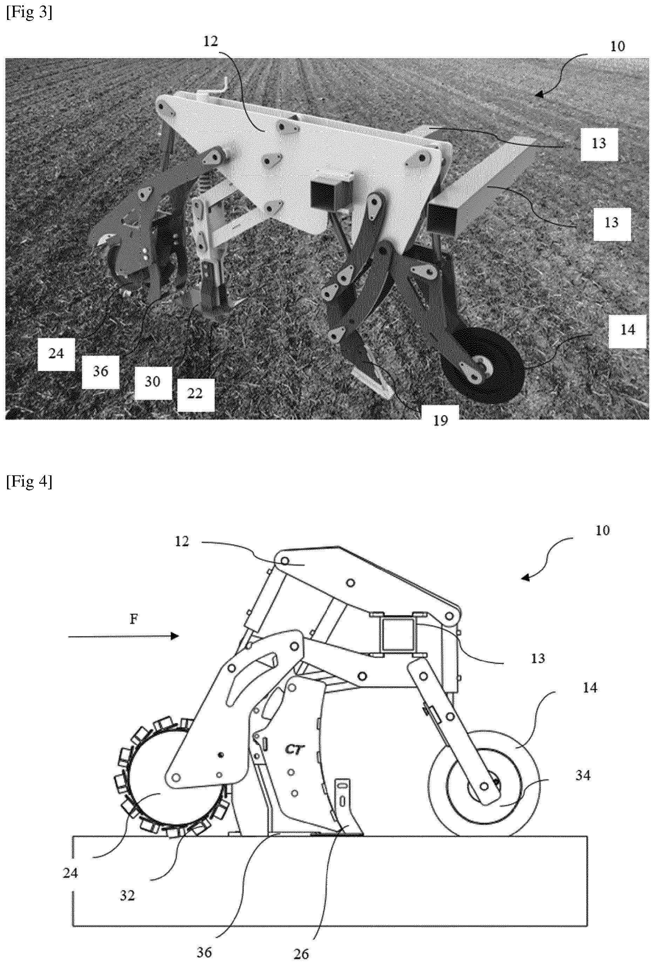

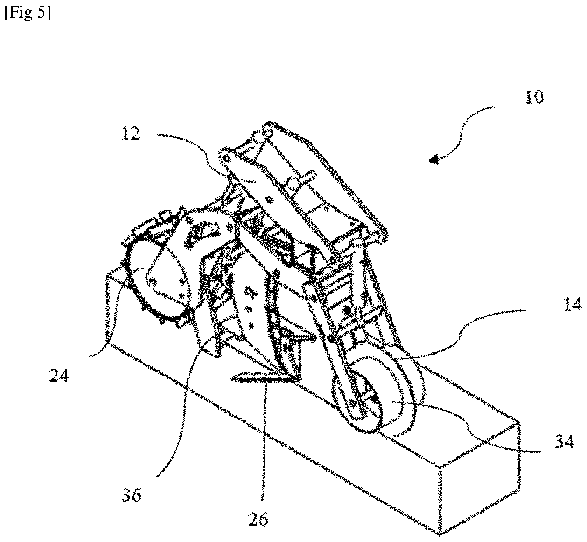

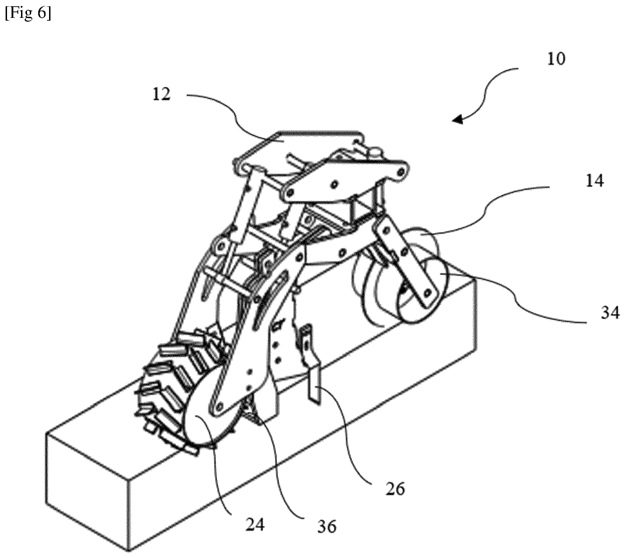

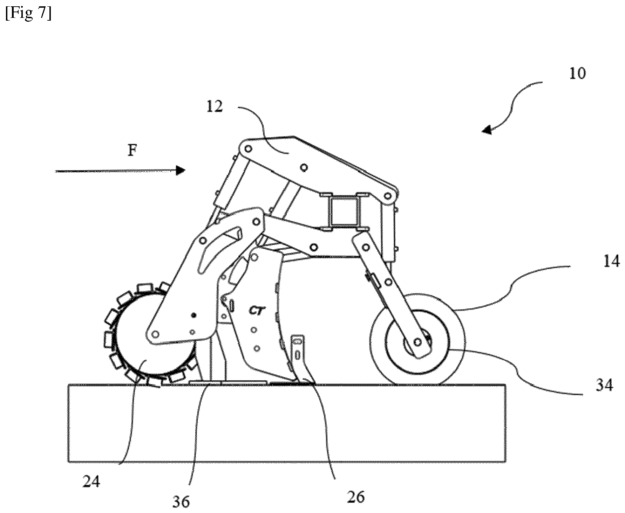

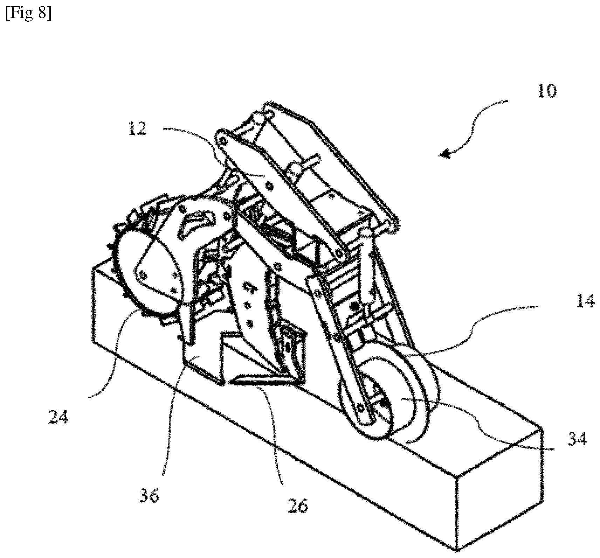

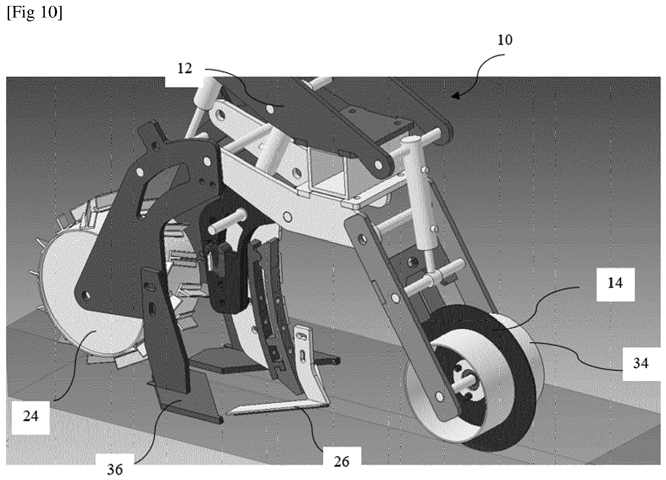

Selon un mode de réalisation visible en figure 3, la barre de sarclage 36 a une forme généralement rectangulaire dans un plan horizontal, allongée selon une direction transversale. Selon un mode de réalisation alternatif illustré sur les figures 7 à 9, la barre de sarclage 36 a une forme de chevron pointant vers l'arrière. Selon un mode de réalisation alternatif illustré sur les figures 4 à 6, la barre de sarclage 36 a, sur un côté du plan longitudinal médian P, une forme rectangulaire et sur l'autre côté du plan longitudinal médian une forme de demi-chevron inversé. Selon un mode de réalisation alternatif illustré sur les figures 10 et 11, la barre de sarclage 36 a une forme de chevron pointant vers l'arrière, les deux branches du chevron étant séparées et formant deux pièces distinctes définissant une ouverture centrale.

Selon un mode de réalisation préféré, la barre de sarclage 36 est amovible. Elle peut par exemple être installée sur la machine agricole si cette dernière est utilisée pour arracher des végétaux et elle peut être retirée si la roue principale n'a qu'une fonction de fermeture de fente.

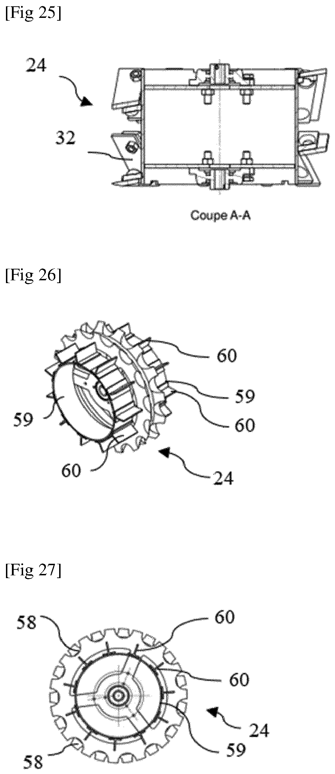

Selon un mode de réalisation particulier représenté aux figures 26 à 28, la roue principale 24 comporte une ou deux ceintures cylindriques 59 coaxiales à la roue principale 24 de diamètre inférieur à la roue principale 24 et conformées pour prendre appui à plat sur le sol. Les ceintures 59 peuvent participer à limiter mécaniquement l'enfoncement de la roue principale dans le sol au-delà d'une profondeur maximale d'enfoncement Pₘₐₓ. Les ceintures 59 peuvent donc agir en tant que limiteurs de profondeur.

Les ceintures 59 comportent avantageusement sur leur surface une pluralité d'ailettes 60 radiales. Les ailettes 60 peuvent notamment avoir une forme rectangulaire allongée selon un axe horizontal et sont de préférence réparties équi-angulairement sur la surface des ceintures 59. Leur longueur selon une direction radiale est de préférence telle que l'extrémité extérieure radiale des ailettes 60 ne dépasse pas la circonférence de la roue principale 24. Les ailettes 60 permettent avantageusement de pincer les végétaux situés sur le trajet de la roue principale.

Le bord périphérique de la roue principale 24 peut être circulaire. Cependant, dans un mode de réalisation avantageux illustré sur les figures 26 à 28, le bord périphérique de la roue principale comporte un sillon en forme de V définissant deux faces 56, les faces 56 comportant chacune une pluralité de créneaux 58. De préférence, les créneaux 58 sont répartis équi-angulairement autour de l'axe X. De préférence encore, deux créneaux successifs sont séparés d'une distance supérieure à 10 mm, de préférence supérieure à 30 mm, de préférence supérieure à 50 mm et/ou inférieure à 300 mm, de préférence inférieure à 200 mm. Cette forme du bord périphérique de la roue principale permet avantageusement une meilleure fermeture de la fente en poussant la terre vers le plan vertical médian.

### Patin de sarclage

Dans certains modes de réalisation illustrés sur les figures 4 à 11, 20 et 21, la machine agricole selon l'invention comporte un support 12 et, reliés au support, un disque d'ouverture 14, un patin de sarclage 26 et une roue principale 24.

Le patin de sarclage 26 est destiné à sarcler les végétaux situés sur son trajet, notamment le liseron des champs.

Le patin de sarclage 26 a de préférence une forme de chevron, la pointe du chevron étant orientée dans la direction d'avancement. Dans sa position de service, le patin de sarclage est agencé pour pénétrer dans le sol, de préférence pour être disposé immédiatement sous la surface du sol, par exemple à une profondeur inférieure à 10 cm, à 5 cm, à 3 cm ou à 1 cm.

### Autres configurations

La machine agricole selon l'invention peut comporter différentes combinaisons de deux outils ou plus.

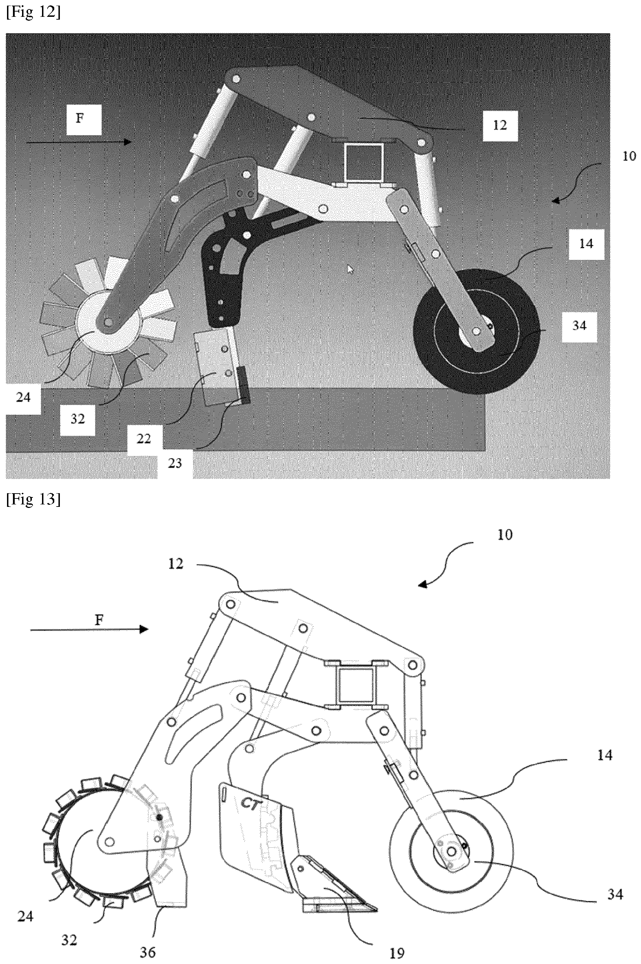

La figure 12 illustre une machine agricole 10 selon l'invention comportant un support 12 et, liés à ce support, trois outils : un disque d'ouverture 14 comportant des limiteurs de profondeur 34, un deuxième dispositif de semage 22 comprenant un deuxième soc 23 et une roue principale 24 comportant des ailettes 32 configurées pour améliorer le comblement de la fente ouverte par le deuxième soc 23. La machine agricole 10 tel qu'illustrée permet avantageusement de d'aérer le sol, sans déposer de composé dans la fente ouverte par le deuxième soc 23.

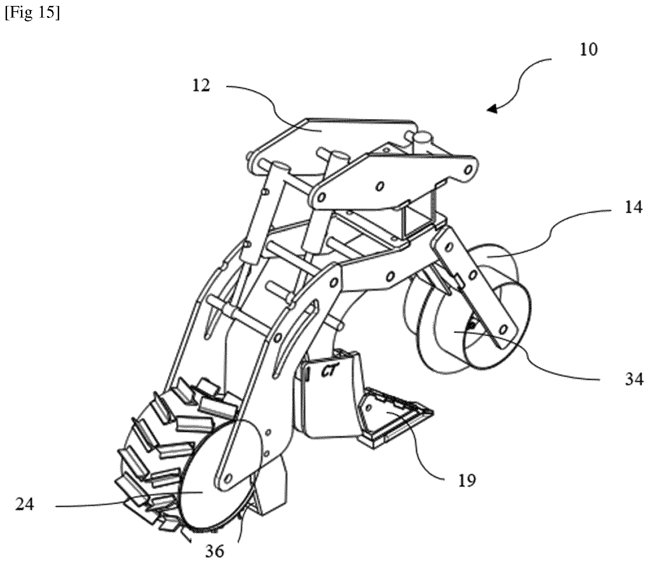

Les figures 13 à 15 illustrent une machine agricole 10 selon l'invention comportant un support 12, un disque d'ouverture 14 comportant des limiteurs de profondeur 34, un décompacteur 16 comportant un premier soc 19 et une roue principale 24 comportant des ailettes 32 et une barre de sarclage 36.

Dans ce mode de réalisation, les ailettes 32 sont orientées vers le plan vertical médian de l'avant vers l'arrière lorsque les ailettes contactent le sol. Cette orientation des ailettes est préférentiellement utilisée pour améliorer le comblement d'une fente. Toutefois, les ailettes orientées de cette manière permettent également un pincement des végétaux, même s'il est moins efficace qu'avec une orientation allant de l'arrière vers l'avant lorsque les ailettes contactent le sol.

Les figures 16 à 18 illustrent une machine agricole 10 selon l'invention comportant un support 12, un disque d'ouverture 14 comportant des limiteurs de profondeur 34, un premier soc 19 de décompacteur, une roue d'appui 20, un dispositif de semage 22 avec un deuxième soc 23, un patin 30 et une descente de semoir secondaire 38, et une roue principale 24 comportant des ailettes 32 et une barre de sarclage 36. La figure 17 représente l'ensemble des outils dans leur position de service. La figure 18 représente le premier soc 19 et la roue secondaire 20 dans une position de retrait, les autres outils étant disposés dans leur position de service. Grâce à la mobilité de chacun des outils indépendamment des autres outils, la machine agricole 10 peut être utilisée dans différentes configurations en fonction des outils placés dans leur position de service. Par exemple lorsque l'utilisation du premier soc 19 n'est pas nécessaire, ce dernier peut être mis dans une position de retrait sans que cela empêche de mettre les autres outils dans la position de service.

La figure 19 illustre une machine agricole 10 selon l'invention comportant un support 12, un disque d'ouverture 14 comportant des limiteurs de profondeur 34, un dispositif de semage 22 comportant un deuxième soc 23, une roue secondaire 20, une descente de semoir 18 et une descente de semoir secondaire 38, ainsi qu'une roue principale 24 avec une barre de sarclage 36. Dans cet exemple, le dispositif de semage 22 comporte deux descentes de semoir, dont l'une 18 est configurée pour déposer un composé dans la fente ménagée par le deuxième soc 23 et l'autre 38 configurée pour déposer un composé au niveau du sol.

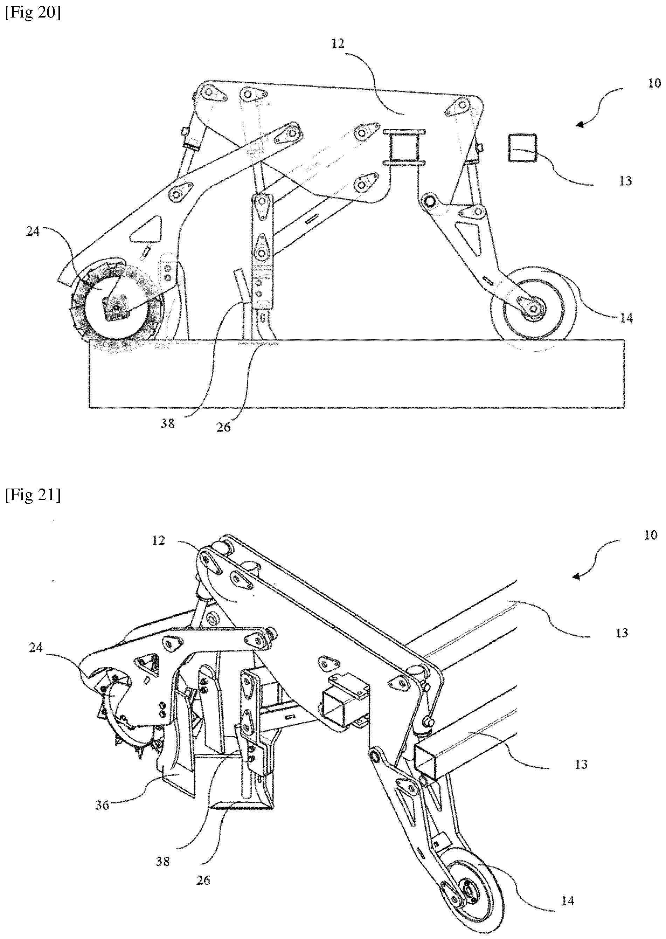

Les figures 20 et 21 illustrent une machine agricole 10 selon l'invention comportant un support 12, un disque d'ouverture 14 comportant des limiteurs de profondeur 34, un patin de sarclage 26 derrière lequel est agencée une descente de semoir secondaire 38, et une roue principale 24 comportant des ailettes 32 et une barre de sarclage 36. Selon ce mode de réalisation, la descente de semoir secondaire 38 dans sa position de service est configurée pour déposer un composé derrière le patin de sarclage dans la fente formée par le disque d'ouverture.

La figure 31 illustre une machine agricole 10 selon l'invention comportant un support 12, un disque d'ouverture 14 comportant des limiteurs de profondeur 34, un dispositif de semage 22 comportant un deuxième soc 23 et une roue principale 24 comportant des ailettes 32. La roue principale est, dans cet exemple, montée à rotation sur l'axe supportant le dispositif de semage 22 et non directement sur le support 12. Le disque d'ouverture et le dispositif de semage sont montés à rotation sur le support 12.

### Fonctionnement

Le fonctionnement d'une machine agricole selon l'invention résulte directement de la description qui précède.

Selon le mode de réalisation représenté en figure 1, le support 12 est fixé à l'au moins une poutre 13, qui elle-même est attachée à un tracteur, puis tiré sur le terrain à semer, selon la direction d'avancement.

Lorsque tous les outils sont placés dans leur position de service, la machine agricole fonctionne de la façon suivante. Le disque d'ouverture 14 s'enfonce progressivement dans le sol jusqu'à ce que les ceintures 34 limitent cet enfoncement. Lors de son avancement, le disque d'ouverture 14 crée une fente principale étroite et coupe les végétaux situés sur son trajet. Le disque d'ouverture 14 agit à la manière d'une roulette à pizzas. Avantageusement, la terre n'a pas besoin d'être préparée.

Le premier soc 19 du décompacteur 16, disposé derrière le disque d'ouverture 14 à une profondeur plus importante, élargit et approfondit la fente étroite. Il permet également de décompacter le sol. La descente de semoir 18 est configurée pour déposer progressivement un premier composé au fond de cette fente élargie. La roue secondaire 20 vient rouler sur la terre autour de la fente pour combler cette dernière, et limite le foisonnement de la terre autour de la fente. Elle limite également la profondeur d'enfoncement du premier soc 19.

Le deuxième soc 23 ouvre une deuxième fente, dont la profondeur est moins importante que celle de la première fente. Cela permet à la descente de semoir secondaire 38 de déposer un deuxième ou plus composé à une profondeur inférieure à celle du premier composé déposé par la descente de semoir 18. Cette deuxième fente est comblée par la roue principale 24. Le patin 30 limite la profondeur d'enfoncement du deuxième soc 23. Avantageusement, il peut également améliorer l'enfouissement du premier composé déposé dans la fente élargie et limite le foisonnement de la terre.

Des végétaux peuvent venir s'interposer sur le trajet de la machine agricole. A cette fin, la barre de sarclage 36 agissant en combinaison avec les ailettes 32 de la roue de fermeture principale 24 réalisent un sarclage et un arrachage efficaces. La barre de sarclage 36 peut être amovible.

D'autres variantes et améliorations peuvent être prévues sans pour autant sortir du cadre de l'invention.

## Revendications

1. Machine agricole (10) comportant :
- une poutre transversale (13) destinée à être tractée par un engin agricole selon une direction d'avancement (F) ; et
- au moins un module porté par la poutre transversale et comportant :
- un support (12) ;
- un premier outil (14) configuré pour ménager une fente dans le sol dans la position de service ;
- une roue principale (24) configurée pour fermer la fente formée par le premier outil ;
le premier outil et la roue principale étant chacun montés sur le support de manière mobile au moins dans une direction verticale, indépendamment l'un de l'autre, de manière à exercer en service une poussée constante sur le sol,
le support étant rigidement fixé à la poutre transversale ou
le module comportant, pour la roue principale et pour le premier outil, un organe élastique respectif exerçant une pression constante sur la roue principale et le premier outil, respectivement.

2. Machine agricole selon la revendication 1, le support étant monobloc.

3. Machine agricole selon l'une des revendications précédentes, comportant au moins un deuxième outil monté sur le support de manière mobile au moins dans une direction verticale, indépendamment du premier outil et de la roue principale.

4. Machine agricole selon la revendication 3, le premier outil, la roue principale et l'au moins deuxième outil étant chacun porté par un axe (40, 42, 44, 46) relié au support de manière à être mobile au moins dans une direction verticale par rapport au support indépendamment des autres axes.

5. Machine agricole selon l'une des revendications 3 ou 4, le deuxième outil étant un décompacteur (16) configuré pour, dans la position de service, décompacter le sol.

6. Machine agricole selon la revendication 5, le décompacteur comprenant un premier soc (19) configuré pour, dans la position de service, décompacter le sol et ménager ou élargir une fente, une descente de semoir (18) configurée pour, dans la position de service, déposer le premier composé à une première profondeur et au moins une roue secondaire (20) configurée pour, dans la position de service, combler ladite fente et/ou pour limiter la profondeur d'enfoncement du décompacteur et/ou pour limiter le foisonnement de la terre autour de ladite fente.

7. Machine agricole selon l'une des revendications précédentes, comportant en outre un troisième outil monté sur le support de manière mobile au moins dans une direction verticale indépendamment des autres outils, le troisième outil étant un dispositif de semage (22) comportant un deuxième soc (23) configuré pour, dans la position de service, ménager une fente dans le sol.

8. Machine agricole selon la revendication 7, le deuxième soc étant configuré pour ménager une fente dans le sol, le deuxième soc comportant en outre une descente de semoir secondaire (38) configurée pour déposer un deuxième composé dans la fente formée par le deuxième soc.

9. Machine agricole selon l'une des revendications 7 ou 8, le dispositif de semage comportant un patin (30) configuré pour être en contact glissant avec le sol dans sa position de service de manière à limiter la profondeur d'enfoncement du dispositif de semage.

10. Machine agricole selon la revendication 9, la position du patin (30) est ajustable et/ou le patin (30) comporte une ou plusieurs cales (72) modifiant l'épaisseur du patin, de sorte à modifier la profondeur d'enfoncement maximale du dispositif de semage.

11. Machine agricole selon l'une des revendications précédentes, la roue principale comportant sur sa surface une pluralité d'ailettes (32) configurées pour pincer des végétaux, les ailettes de la roue principale étant réparties en deux groupes chacun disposé sur une moitié de la surface de roulement de la roue principale séparée de l'autre moitié par un plan longitudinal médian vertical passant par le centre de la roue principale, les ailettes ayant une forme allongée selon une direction allant, depuis le plan longitudinal médian, toutes de l'avant vers l'arrière ou toutes de l'arrière vers l'avant lorsque les ailettes contactent le sol, et inclinée d'un angle α avec ledit plan longitudinal médian.

12. Machine agricole selon la revendication 12, comprenant en outre une barre de sarclage (36) disposée devant la roue principale dans la direction d'avancement et configurée pour, dans la position de service, arracher des végétaux.

13. Machine agricole selon l'une des revendications précédentes, comportant plus de 5 dits modules.

14. Procédé de semage au moyen d'une machine agricole selon la revendication 8 en combinaison avec la revendication 6, dans lequel on tracte la machine agricole et on dépose au moyen de la descente de semoir le premier composé, de préférence un engrais, de préférence sous forme de granulés ou liquide, à une profondeur inférieure à la profondeur à laquelle on dépose le deuxième composé, de préférence une graine, au moyen de la descente de semoir secondaire.
